(19) Europäisches Patentamt
European Patent Office
Office européen des brevets

(11) Publication number: **0 093 938**
**A1**

(12) **EUROPEAN PATENT APPLICATION**

(21) Application number: 83104044.9

(22) Date of filing: 25.04.83

(51) Int. Cl.³: **C 01 B 13/02**, A 62 B 21/00

(30) Priority: 27.04.82 JP 69678/82

(43) Date of publication of application: 16.11.83 Bulletin 83/46

(84) Designated Contracting States: CH DE FR GB IT LI SE

(71) Applicant: Hoshiko Medical Laboratories, Inc., 45, Iwano Ueki-machi, Kamoto-gun Kumamoto-ken (JP)

(72) Inventor: Hoshiko, Yoshinori Hoshiko Medical Lab.Inc., 45, Iwano Ueki-machi, Kamoto-gun Kumamoto-ken (JP)

(74) Representative: Luyken, Richard, Dipl.-Phys., Tal 27, D-8000 München 2 (DE)

(54) **A method of generating oxygen for emergency use.**

(57) A method of generating oxygen for emergency use, wherein a mixture of solid matters prepared by binding a catalyst such as the powder of manganese dioxide with a water-soluble binding agent such as a gum arabic solution and an addition compound of sodium carbonate and hydrogen peroxide is intermixed with water, so that the solid matters are dissolved allowing the catalyst to gradually come into contact with a solution of hydrogen peroxide resulting from the decomposition of the addition compound of sodium carbonate and hydrogen peroxide, thereby generating oxygen gradually and continuously for an extended period of time.

EP 0 093 938 A1

PATENTANWALT Dipl.-Phys. RICHARD LUYKEN

Hoshiko Medical Laboratories, Inc.
45, Iwano, Ueki-machi,
Kamoto-gun, Kumamoto-ken,
JAPAN

EP 7863
25.04.1983
L/mj

A Method of Generating Oxygen for Emergency Use

a) Field of the invention:

The present invention relates to a method of generating oxygen for emergency use, wherein an additional compound of sodium carbonate and hydrogen peroxide ($2Na_2CO_3 \cdot 3H_2O_2$)is employed.

b) Description of the prior art:

One's life is sometimes endangered by oxygen starvation at the time of escape from a fire. In such case, a supply of oxygen is needed. Besides, when poisonous gases are generated at the time of fire, it is necessary to wear a poisonous gas absorbing mask which contains active carbon, for example, and at the same time, to get oxygen supplied. Thus, it is possible to escape danger. For this particular purpose, it is desired to have an oxygen generating means which is light in weight and handy to carry around and which can produce oxygen by simple operation. A handy oxygen generating means is also demanded in such case that oxygen inhalation is urgently needed when people gets sick suddenly.

As an oxygen generating method applicable to such oxygen generating means, a method may be considered, wherein an addition compound of sodium carbonate and hydrogen peroxide is intermixed with water in the presence of a catalyst to generate oxygen. When 2 mols of the addition compound of sodium carbonate and hydrogen peroxide is intermixed with

water in the presence of a catalyst, 48 g of oxygen is generated through a chemical reaction as shown by the following chemical reaction formula:

$$2Na_2CO_3 \cdot 3H_2O_2 \longrightarrow 2\ (Na_2CO_3 \cdot H_2O_2) + H_2O + 1.5O_2$$

This reaction takes place as follows: when the addition compound of sodium carbonate and hydrogen peroxide is intermixed with water, the addition compound is decomposed into sodium carbonate and a hydrogen peroxide solution. The hydrogen peroxide solution is then decomposed by the catalyst into water and oxygen. This reaction takes place drastically and moreover, causes the generation of heat. Consequently, depending on the amounts of water and catalyst used, the temperature instantaneously jumps to 100° C causing bumping, while releasing oxygen and vapor simultaneously, to complete the reaction in a very short space of time. This is not desirable as an oxygen supplying method for cases of accident and sudden illness in which a supply of oxygen is demanded continuously at a constant rate for a certain period of time.

Therefore, in order to generate from an addition compound of sodium carbonate and hydrogen peroxide of an amount that is conveniently carried around and usable in emergencies oxygen of an amount needed for emergency inhalation constantly for a predetermined length of time, it is necessary to check the drastic generation of oxygen and control the reaction so that oxygen is generated at a constant rate for

a predetermined period of time. For this particular purpose, it is necessary to add water and a catalyst little by little and slowly thereby controlling the amounts of water and catalyst to be added, while observing the amount of oxygen being generated. In case of emergency, however, it is practically impossible to get a supply of oxygen while making such control.

## SUMMARY OF THE PRESENT INVENTION

The primary object of the present invention is to provide a method of generating oxygen for emergency use, wherein a mixture of an addition compound of sodium carbonate and hydrogen peroxide and water-solubilized solid matters of manganese dioxide or salts of metal such as iron, copper or lead to be used as a catalyst to decompose hydrogen peroxide is intermixed with an adequate amount of water, so that said solid matters are dissolved gradually allowing said catalyst to come into contact with a hydrogen peroxide solution resulting from the decomposition of said addition compound of sodium carbonate and hydrogen peroxide to promote a chemical reaction, thereby generating oxygen continuously at a constant rate for an extended period of time.

Another object of the present invention is to provide a method of generating oxygen for emergency use, wherein water-soluble solid matters of manganese dioxide or salts of metal

such as iron, copper or lead to be used as a catalyst are prepared in several varieties each with a different dissolving speed relative to water, and a mixture of said solid matters and an addition compound of sodium carbonate and hydrogen peroxide is intermixed with an adequate amount of water, so that said solid matters are dissolved gradually in order of dissolving speed, beginning with the fastest, allowing the catalyst to come into contact little by little with a hydrogen peroxide solution to promote a chemical reaction gradually, thereby generating oxygen continuously at a constant rate for an extended period of time.

Still another object of the present invention is to provide a method of generating oxygen for emergency use, wherein solid matters are prepared by binding the powder of manganese dioxide or salts of metal such as iron, copper or lead to be used as a catalyst with a water-soluble binding agent, and a mixture of said solid matters and an addition compound of sodium carbonate and hydrogen peroxide is intermixed with an adequate amount of water, so that said solid matters are dissolved gradually allowing the dissolved catalyst to come into contact with a hydrogen peroxide solution to promote a chemical reaction gradually, thereby generating oxygen continuously at a constant rate for an extended period of time.

Still another object of the present invention is to

provide a method of generating oxygen for emergency use, wherein solid matters are prepared in several varieties each with a different dissolving speed by binding the powder of manganese dioxide or salts of metal such as iron, copper or lead to be used as a catalyst with a water-soluble binding agent, and a mixture of said solid matters and an addition compound of sodium carbonate and hydrogen peroxide is intermixed with an adequate amount of water, so that said solid matters are dissolved gradually in order of dissolving speed, beginning with the fastest, allowing the catalyst to come into contact gradually with a hydrogen peroxide solution to promote a chemical reaction gradually, thereby generating oxygen continuously at a constant rate for an extended period of time.

Still another object of the present invention is to provide a method of generating oxygen for emergency use, wherein solid matters are prepared by binding the powder of manganese dioxide or salts of metal such as iron, copper or lead to be used as a catalyst by means of an aqueous solution of polyvinyl alcohol, and a mixture of said solid matters and an addition compound of sodium carbonate and hydrogen peroxide is intermixed with an adequate amount of water, so that said solid matters are dissolved gradually allowing the catalyst to come into contact with a hydrogen peroxide solution to promote a chemical reaction gradually, thereby

generating oxygen continuously at a constant rate for an extended period of time.

Still another object of the present invention is to provide a method of generating oxygen for emergency use, wherein solid matters are prepared in several varieties each with a different dissolving speed by binding the powder of manganese dioxide or salts of metal such as iron, copper or lead to be used as a catalyst by means of aqueous solutions of polyvinyl alcohol each with a different concentration, and a mixture of said solid matters and an addition compound of sodium carbonate and hydrogen peroxide is intermixed with an adequate amount of water, so that said solid matters are dissolved gradually in order of dissolving speed, beginning with the fastest, allowing the catalyst to come into contact with a hydrogen peroxide solution to promote a chemical reaction gradually, thereby generating oxygen continuously at a constant rate for an extended period of time.

Still another object of the present invention is to provide a method of generating oxygen for emergency use, wherein solid matters are prepared by binding the poweder of manganese dioxide or salts of metal such as iron, copper or lead to be used as a catalyst by means of a gum arabic solution, and a mixture of said solid matters and an addition compound of sodium carbonate and hydrogen peroxide is intermixed with an adequate amount of water, so that said

solid matters are dissolved gradually allowing the catalyst to come into contact with a hydrogen peroxide solution to promote a chemical reaction gradually, thereby generating oxygen continuously at a constant rate for an extended period of time.

Still another object of the present invention is to provide a method of generating oxygen for emergency use, wherein solid matters are prepared in several varieties each with a different dissolving speed by binding the powder of manganese dioxide or salts of metal such as iron, copper or lead to be used as a catalyst by means of gum arabic solutions each with a different concentration, and a mixture of said solid matters and an addition compound of sodium carbonate and hydrogen peroxide is intermixed with an adequate amount of water, so that said solid matters are dissolved gradually in order of dissolving speed, beginning with the fastest, allowing the catalyst to come into contact with a hydrogen peroxide solution to promote a chemical reaction gradually, thereby generating oxygen continuously at a constant rate for an extended period of time.

Still another object of the present invention is to provide a method of generating oxygen for emergency use, wherein solid matters are prepared by binding the powder of manganese dioxide or salts of metal such as iron, copper or lead to be used as a catalyst with carboxymethylcellulose,

and a mixture of said solid matters and an addition compound of sodium carbonate and hydrogen peroxide is intermixed with an adequate amount of water, so that said solid matters are dissolved gradually allowing the catalyst to come into contact with a hydrogen peroxide solution to promote a chemical reaction gradually, thereby generating oxygen continuously at a constant rate for an extended period of time.

Still another object of the present invention is to provide a method of generating oxygen for emergency use, wherein solid matters are prepared by binding the powder of manganese dioxide or salts of metal such as iron, copper or lead to be used as a catalyst with starch, and a mixture of said solid matters and an addition compound of sodium carbonate and hydrogen peroxide is intermixed with an adequate amount of water, so that said solid matters are dissolved gradually allowing the catalyst to come into contact with a hydrogen peroxide solution to promote a chemical reaction gradually, thereby generating oxygen continuously at a constant rate for an extended period of time.

## BRIEF DESCRIPTION OF THE DRAWING

The drawing is a graph showing relationship between the time elapsed and the amount of oxygen generated in Example 2 of the present invention.

## DETAILED DESCRIPTION OF THE EXAMPLES OF THE PRESENT INVENTION

Now, the method of generating oxygen for emergency use according to the present invention is described below in detail by way of Example 1.

When it is presumed that 300 g of addition compound of sodium carbonate and hydrogen peroxide are used as the amount that is considered convenient for carrying around, the required amount of manganese dioxide powder to be used as a catalyst is 6 g, or 2% by weight based on the weight of the addition compound of sodium carbonate and hydrogen peroxide. The 6 g of manganese dioxide powder was equally divided into five portions, each weighing 1.2 g. These portions of manganese dioxide were mixed respectively with aqueous solutions of polyvinyl alcohol each with a different concentration (0.7%, 2.0%, 4.0%, 6.0% and 8.0%). The mixtures were then respectively formed into solid matters in spherical shape each with a diameter of about 5 mm, and dried by heating to 130° C. As the polyvinyl alcohol to be used, it is preferable to use polyvinyl alcohol of a low saponification rate that can be easily dissolved even in cold water.

Thus prepared solid matters of manganese dioxide were intermixed with 300 g of addition compound of sodium cargonate and hydrogen peroxide.

When oxygen supply is needed, 600 cc of water is added to the mixture of said addition compound of sodium carbonate and hydrogen peroxide and said solid matters. Then, said solid matters of manganese dioxide started dissolving successively, beginning with the one bound by the polyvinyl alcohol with the lowest concentration (0.7%). On the other hand, said addition compound of sodium carbonate and hydrogen peroxide decomposed into sodium carbonate and a hydrogen peroxide solution, when water was added. The hydrogen peroxide solution decomposed into water and oxygen, with the manganese dioxide, which has been dissolved first, as a catalyst. The chemical reaction at that time progressed gradually because the catalyst involved was small in amount, thereby generating oxygen of an amount needed in the time of emergency. That is, No. 1 solid matter of manganese dioxide shown in Table I started dissolving 0.01 second after water has been added, generating the needed amount of oxygen within 1 second. After a certain period of time has elapsed, No. 2 solid matter of manganese dioxide began to dissolve. Therefore, the amount of catalyst involved in the chemical reaction increased. However, as part of the hydrogen peroxide solution decomposed into water and oxygen because of the chemical reaction involved, the concentration of hydrogen peroxide solution was decreased by the water yielded as a result of the decomposition of the hydrogen peroxide solution. In

other words, although the catalyst increased in amount, the reaction to decompose the hydrogen peroxide solution into water and oxygen was carried out at a substantially constant rate because the concentration of said hydrogen peroxide solution decreased. Consequently, the amount of oxygen generated remained substantially constant. Likewise, No. 3, No. 4 and No. 5 solid matters of manganese dioxide dissolved successively, increasing the amount of catalyst gradually. As the concentration of the hydrogen peroxide solution decreased gradually, however, the amount of oxygen generated remained substantially constant at all times.

Table I

| Manganese dioxide | Concentration of PVA | Dessolving time |
|---|---|---|
| No. 1 | 0.7 % | 0 min. 1 sec. |
| No. 2 | 2.0 | 1 min. 24 sec. |
| No. 3 | 4.0 | 3 min. 47 sec. |
| No. 4 | 6.0 | 7 min. 50 sec. |
| No. 5 | 8.0 | 15 min. 8 sec. |

As described above, when a mixture of sodium carbonate and hydrogen peroxide and solid matters prepared by binding a catalyst with a water-soluble binding agent is intermixed with an adequate amount of water, oxygen starts generating

immediately at the rate of 1 to 1.5 liters per minute for 20 to 30 minutes to a total amount of approximately 32 liters.

Next, Example 2, wherein a gum arabic solution is employed as a binding agent, is described below.

Table II

| | Manganese dioxide | Gum arabic solution | Dissolving time |
|---|---|---|---|
| No. 1 | 30 g | 0.1 % | 2 - 5 seconds |
| No. 2 | 45 g | 0.5 | 3 - 4 munites |
| No. 3 | 50 g | 1.0 | 8 - 10 minutes |

As shown in Table II, No. 1 solid matter was prepared by binding 30 g of manganese dioxide by means of a 15 cc gum arabic solution comprising water and 0.1% of gum arabic, No. 2 solid matter was prepared by binding 45 g of manganese dioxide by means of a 15 cc gum arabic solution comprising water and 0.5% of gum arabic, and No. 3 solid matter was prepared by binding 50 g of manganese dioxide by means of a 15 cc gum arabic solution comprising water and 1% of gum arabic. Of these three solid matters, 3 g of No. 1 solid matter, 2 g of No. 2 solid matter, and 1 g of No. 3 solid matters were mixed with an addition compound of sodium carbonate and hydrogen peroxide to form a mixture. When an adequate amount of water was intermixed with said mixture,

a chemical reaction took place in the same way as Example 1. No. 1 solid matter dissolved in 2 to 5 seconds after water has been added, thereby generating oxygen at a constant rate. Afterwards, No. 2 and No. 3 solid matters dissolved successively in accordance with the progress of time as shown in Table II, continuing to generate oxygen at a substantially constant rate for an extended period of time.

Also in Example 2 as described above, oxygen began to generate immediately when said mixture and water were intermixed. The amount of oxygen produced increased to a desired amount within 2 to 3 minutes, with oxygen generating continuously for 20 to 30 minutes.

As described so far by way of Examples, the method according to the present invention generates oxygen of an amount needed in case of emergency continuously for an extended period of time (at least a period of time sufficient for people to escape danger in emergencies such as a fire or sudden illness). Further, the use of the method according to the present invention is simple enough for anyone to operate because what is required to do is just add an adequate amount of water to a previously-prepared mixture of addition compound of sodium carbonate and hydrogen peroxide and said solid matters.

In the Examples described above, manganese dioxide was used as a catalyst. However, salts of metal such as iron,

copper, or lead may also be used. In addition, the binding agent is not limited to a polyvinyl alcohol or gum arabic solution. Any binding agent may be used instead if it is water soluble. For instance, the use of carboxymethylcellulose or starch may be considered.

PATENTANWALT Dipl.-Phys. RICHARD LUYKEN

Hoshiko Medical Laboratories, Inc.
45, Iwano, Ueki-machi,
Kamoto-gun, Kumamoto-ken,
JAPAN

EP 7863
25.04.1983
L/mj

## Claims

1. A method of generating oxygen for emergency use, wherein water is added to a mixture of addition compound of sodium carbonate and hydrogen peroxide and water-soluble solid matters of manganese dioxide or salts of metal such as iron, copper, or lead to be used as a catalyst causing a chemical reaction to take place, so that oxygen is generated continuously at a constant rate for an extended period of time.

2. A method of generating oxygen for emergency use as set forth in Claim 1, wherein said water-soluble solid matters are prepared by binding the powder of catalyst with a water-soluble binding agent.

3. A method of generating oxygen for emergency use as set forth in Claim 2, wherein said water-soluble binding agent is polyvinyl alcohol.

4. A method of generating oxygen for emergency use as set forth in Claim 2, wherein said water-soluble binding agent is a gum arabic solution.

5. A method of generating oxygen for emergency use as set forth in Claim 1, wherein said water-soluble solid matters are prepared in a plural number of varieties each with a different dissolving speed relative to water.

6. A method of generating oxygen for emergency use as set forth in Claim 5, wherein said water-soluble solid matters

are prepared by binding the powder of catalyst with water-soluble binding agents each with a different dissolving speed relative to water.

7. A method of generating oxygen for emergency use as set forth in Claim 6, wherein said water-soluble solid matters are prepared by binding the powder of catalyst by means of polyvinyl alcohol solutions each with a different concentration.

8. A method of generating oxygen for emergency use as set forth in Claim 6, wherein said water-soluble solid matters are prepared by binding the powder of catalyst by means of gum arabic solutions each with a different concentration.

0093938

1/1

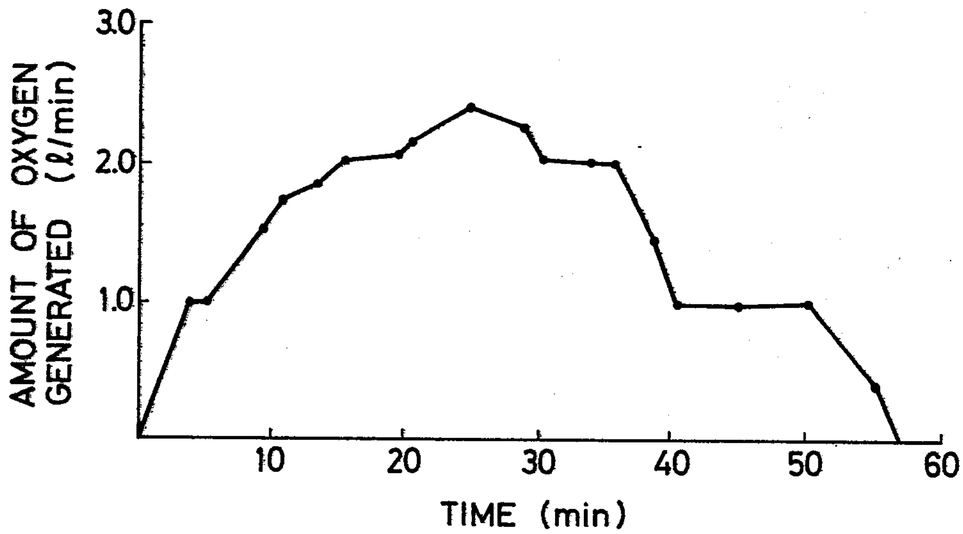

AMOUNT OF OXYGEN GENERATED (ℓ/min)
3.0
2.0
1.0
10
20
30
40
50
60
TIME (min)

0093938

European Patent Office

# EUROPEAN SEARCH REPORT

Application number

EP 83 10 4044

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| P,X | Patent Abstracts of Japan vol. 7, no. 3, 7 January 1983 & JP-A-57-160902 | 1-3,5-7 | C 01 B 13/02<br>A 62 B 21/00 |
| X | Chemical Abstracts vol. 91, no. 10, 3 September 1979, Columbus, Ohio, USA page 243, column 1, abstract no. 78436v & JP-A-79-26988 | 1-3 | |
| A | Patent Abstracts of Japan vol. 3, no. 128, 24 October 1979 page 151C62 & JP-A-54-109091 | 1-3 | |
| A | Patent Abstracts of Japan vol. 3, no. 50, 27 April 1979 page 137C44 & JP-A-54-26990 | 1 | **TECHNICAL FIELDS SEARCHED (Int. Cl. 3)** |
| A | Patent Abstracts of Japan vol. 3, no. 50, 27 April 1979 page 137C44 & JP-A-54-26989 | | C 01 B 13/00 |

The present search report has been drawn up for all claims

| Place of search | Date of completion of the search | Examiner |
|---|---|---|
| BERLIN | 02-08-1983 | ASSOGNA R. |

**CATEGORY OF CITED DOCUMENTS**

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82